# EUROPÄISCHE PATENTSCHRIFT

(11) **EP 3 441 625 B1**
(45) Veröffentlichungstag und Bekanntmachung des Hinweises auf die Patenterteilung: **17.06.2020**
(21) Anmeldenummer: 17185298.1
(22) Anmeldetag: 08.08.2017
(51) Int. Cl.: F16B 2/12, F16B 5/02

(54) **MONTAGEELEMENT MIT DRUCKBEGRENZUNG**
MOUNTING ELEMENT WITH PRESSURE LIMITATION
ÉLÉMENT DE MONTAGE À LIMITATION DE PRESSION

(43) Veröffentlichungstag der Anmeldung: 13.02.2019
(73) Patentinhaber: B&R Industrial Automation GmbH, 5142 Eggelsberg (AT)
(72) Erfinder: Naderlinger, Martin, 5231 Schalchen (AT); Birgmann, Erwin, 5141 Moosdorf (AT); Mair, Daniel, 4710 Grieskirchen (AT)
(74) Vertreter: Patentanwälte Pinter & Weiss OG

(56) Entgegenhaltungen:
- WO-A1-2008/003407
- DE-C- 939 058
- GB-A- 828 194
- US-A- 1 919 812
- US-A1- 2007 003 361
- US-B1- 6 238 155

## Beschreibung

Die gegenständliche Erfindung betrifft ein Montageelement umfassend ein Stellorgan, ein elastisches Spannelement und ein Betätigungselement, wobei das Stellorgan ein Druckelement und ein Gegendruckelement aufweist und das elastische Spannelement mit dem Druckelement und dem Gegendruckelement verbunden ist und das Betätigungselement eine Werkzeugaufnahme mit einer Montageausnehmung aufweist und bei Betätigung in eine Anziehrichtung bzw. Löserichtung einen Anpressdruck des elastischen Spannelements zwischen dem Druckelement und dem Gegendruckelement erhöht bzw. verringert. Weiters betrifft die gegenständliche Erfindung eine Verwendung des Montageelements für die Montage eines Moduls auf einem Grundkörper.

Module, wie beispielsweise Panels, Tastaturen oder weitere Ein/Ausgabeeinheiten für Industrieelektronik, müssen oftmals an einem Grundkörper, beispielsweise einer Schrankwand fixiert werden. Hierzu werden Montageelemente verwendet, die in mit dem zu befestigenden Modul verhakt werden. Diese Montageelemente weisen jeweils eine Schraube auf, die in ein Innengewinde des jeweiligen Montageelements eingeschraubt ist und in Richtung des Grundkörpers, bzw. des Abschnitts des Grundkörpers, welcher einzuklemmen ist, zeigt. Wird die Schraube angezogen, so fährt diese aus dem Innengewinde des Montageelements in Richtung des Grundkörpers aus, womit der Grundkörper gegen eine Gegendruckfläche des Moduls eingeklemmt und fixiert wird, und die Position des Moduls am Grundkörper sichergestellt wird. Weiters kann oftmals durch die Klemmung auch eine spezifizierte Schutzart (z.B. Feuchteschutz) sichergestellt werden, beispielsweise durch Komprimierung einer Dichtung zwischen Modul und Grundkörper.

Das auf die Schraube wirkende Drehmoment sollte ein maximales Drehmoment, z.B.: 0,1 Nm, nicht überschreiten, was sonst zu einer Überbeanspruchung oder gar Zerstörung des Montagelements bzw. des Moduls führen kann - insbesondere wenn für die Montage vollständig ungeeignetes Montagewerkzeug, z.B. ein Akkuschrauber, verwendet wird. Um das wirkende Drehmoment zu begrenzen kann natürlich ein Drehmomentschlüssel als Montagewerkzeug verwendet oder vorgeschrieben werden. Damit können jedoch keine Bedienfehler ausgeschlossen werden, da der Anwender am Drehmomentschlüssel ein ungeeignetes Drehmoment einstellen, oder gänzlich auf einen Drehmomentschlüssel verzichten könnte. Zudem weisen Drehmomentschlüssel eine Streuung hinsichtlich des eingestellten Drehmoments auf, unter anderem verursacht durch unterschiedliche Reibbeiwerte. Die Druckschriften US 4,692,075 A, DE 298 12 351 U1, DE 199 03 539 A1, US 6,238,155 B1 und DE 10 2011 106 696 A1 offenbaren Montageelemente, die eine integrierte Drehmomentbegrenzung aufweisen. Hier dient eine Sperrmechanik im Montageelement zur Begrenzung des wirkenden Drehmoments. Das bedeutet im Grunde, dass die Drehmomentbegrenzung vom Montagewerkzeug (d.h. dem Drehmomentschlüssel) auf das Montageelement ausgelagert wird, womit sichergestellt ist, dass das maximale Drehmoment nicht überschritten wird, selbst wenn kein Drehmomentschlüssel verwendet wird.

Es ist Aufgabe der Erfindung ein alternatives Montageelement anzugeben, welches die sichere Montage eines Moduls auf einem Grundkörper ermöglicht, wobei der auf das Modul bzw. den Grundkörper wirkende Anpressdruck einen Maximaldruck nicht überschritten wird. Diese Aufgabe wird erfindungsgemäß gelöst, indem das Montageelement ein Verdrängungselement aufweist, das derart mit dem Spannelement verbunden ist, dass das Verdrängungselement, sobald der Anpressdruck einen Maximaldruck überschreitet, den Werkzeugaufnahmebereich der Werkzeugaufnahme ausfüllt. Damit ist eine sichere Montage des Moduls am Grundkörper möglich, wobei das Modul, bzw. der Grundkörper, aber auch das Montageelement vor einem zu hohen Anpressdruck und damit einhergehender Materialermüdung oder Bruch geschützt wird. Weiters ist keine Verwendung eines Drehmomentschlüssels notwendig, da der Anpressdruck den Maximaldruck nicht überschreiten kann. Der Maximaldruck zwischen Druckkörper und Gegendruckkörper (der weiter auf das Modul und den Grundkörper wirkt) kann über ein geeignetes gewähltes Spannelement eingestellt werden. Das Spannelement wird durch die Betätigung des Betätigungselements gespannt oder entlastet, womit der wirkende Anpressdruck justiert wird. Grundlegend ist unter Verwendung eines erfindungsgemäßen Montagelements eine schnellere Montage des Moduls, möglich, beispielsweise wenn ein Akkuschraubers als Montagewerkzeug verwendet wird. Nachdem der Maximaldruck erreicht wurde, ist eine Betätigung des Betätigungselements über die, beispielsweise sechskantige, Montageausnehmung der Werkzeugaufnahme nicht mehr möglich, da das Montagewerkzeug, beispielsweise ein Inbus, nicht mehr in die Montageausnehmung eingeführt werden kann, da diese durch das Verdrängungselement ausgefüllt wird. Ausgefüllt bedeutet hier jedoch nicht, dass das komplette Volumen der Montageausnehmung ausgefüllt sein muss, sondern lediglich, dass diese zumindest teilweise in der Tiefe, in welcher das Montagewerkzeug eingeführt werden kann, ausgefüllt ist. Weist die Montageausnehmung eine gewisse Tiefe und einen gewissen Querschnitt auf, so ist es ausreichend wenn die Tiefe teilweise durch das Verdrängungselement ausgefüllt wird. Es ist aber nicht zwingend notwendig den gesamten Querschnitt der Montageausnehmung auszufüllen um das Montagewerkzeug zu verdrängen.

Vorteilhafterweise weist die Werkzeugaufnahme eine Demontageausnehmung auf die bei mit dem Verdrängungselement ausgefüllter Montageausnehmung eine Betätigung des Betätigungselements in die Löserichtung ermöglicht, um den Anpressdruck zu verringern. Das Betätigungselement kann somit unter Verwendung eines Demontagewerkzeugs über die Demontageausnehmung weiterhin betätigt werden, jedoch nur in Löserichtung. Damit ist eine Demontage des Montageelements möglich, was unter Verwendung des Montageelements nicht mehr möglich wäre, da das Verdrängungselement in der Montageausnehmung eine Anwendung des Montagewerkzeugs nicht mehr erlaubt.

Die Demontageausnehmung kann beispielsweise eine in Anziehrichtung angeschrägte Flanke aufweisen. Dies kann im Grunde einer Umkehrung der Konstruktion eines Einweg-Schlitz-Schraubkopfs entsprechen. Bei der gegenständlichen Erfindung wird jedoch das Anziehen in Anziehrichtung verhindert, wogegen bei einer Einweg-Schlitz-Schraube das Lösen verhindert wird, indem der Schraubkopf eine angeschrägte Flanke in Löserichtung aufweist. Damit wäre eine Betätigung des Betätigungselements in Löserichtung beispielsweise durch einen Schlitzschraubendreher als Lösewerkzeug ermöglicht, da das Demontagewerkzeug mit den Kanten der Flanken in Anschlag geht. Eine Betätigung in Anziehrichtung wird verhindert, da das Demontagewerkzeug über die Schrägen der Flanken durchrutscht.

Die Demontageausnehmung kann eine geringere Tiefe als die Montageausnehmung aufweisen. Dies ist vorteilhaft, wenn sich Montageausnehmung und Demontageausnehmung über einen gemeinsamen Teil des Querschnitts der Werkzeugaufnahme erstrecken. Ist die Montageausnehmung beispielsweise zentriert und die Demontageausnehmung ringförmig (ggf. mit abgeschrägten Flanken), so können die Montageausnehmung und Demontageausnehmung unterschiedliche Tiefen aufweisen oder gar die Montageausnehmung eine geringere Tiefe als die Demontageausnehmung aufweisen. Natürlich muss die Demontageausnehmung derart gestaltet sein, dass sie bei einer mit dem Verdrängungselement ausgefüllter Montageausnehmung nicht ebenso in der Tiefe ausgefüllt wird, sodass das Demontagewerkzeug verdrängt wird.

Vorteilhafterweise kann das Druckelement als Hülse mit einer zentralen axial durchgehenden Ausnehmung ausgeführt sein und an einem ersten axialen Ende an der Ausnehmung des Druckelement ein Innengewinde angeordnet sein.

Dies ist ganz besonders vorteilhaft, wenn das Betätigungselement mit einem Außengewinde in das Innengewinde des Druckelements geschraubt ist. Damit steht das Betätigungselement mit dem Druckelement in Eingriff, womit auch das Gegendruckelement über das Spannelement mit dem Betätigungselement elastisch gekoppelt ist. So kann der Anpressdruck über die Gewindestellung von Innengewinde und Außengewinde justiert werden, womit eine sukzessive Justierung des wirkenden Anpressdrucks ermöglicht wird.

Weiter können Druckelement und Gegendruckelement in Richtung des Anpressdrucks relativ zu einander bewegbar sein. So ist es möglich das Montageelement in Position zu bringen, wobei vorerst kein Kontakt zu Modul und Grundkörper bestehen muss. Bei Betätigung des Betätigungselements in Anziehrichtung werden Druckelement und Gegendruckelement - je nach Ausführungsform - zueinander oder auseinander bewegt, bis das Druckelement Kontakt zum Modul und das Gegendruckelement Kontakt zum Grundkörper hat. Sobald dieser Kontakt besteht, können Druckelement und Gegendruckelement nicht mehr relativ zueinander bewegt werden und es baut sich bei Betätigung des Betätigungselements in Anziehrichtung weiter der Anpressdruck zwischen Druckelement und Gegendruckelement auf, bis der Anpressdruck den Maximaldruck erreicht. In dieser Ausgestaltung können unterschiedliche Geometrien von Modulen und Grundkörpern mittels eines flexiblen und längenveränderlichen Montageelements aneinander fixiert werden. Sind Druckelement und Gegendruckelement nicht relativ zueinander bewegbar, so müssten die Geometrien von Druckelement und Gegendruckelement an die Geometrien von Modul und Grundkörper angepasst sein.

Am Betätigungselement kann eine zentrale, axial durchgehende Ausnehmung vorgesehen sein, wobei an einem ersten axialen Ende des Betätigungselements die Montageausnehmung vorgesehen ist und das Verdrängungselement in der Ausnehmung des Betätigungselements angeordnet ist.

Weiters kann am Gegendruckelement ein zentraler axial vorstehender Dorn vorgesehen sein, der das Verdrängungselement ausbildet und der in der Ausnehmung des Betätigungselements angeordnet ist.

Alternativ ist ein Bolzen vorgesehen, dessen erstes axiale Ende das Verdrängungselement ausbildet, das der Ausnehmung des Betätigungselements angeordnet ist, und dessen gegenüberliegendes zweites axiale Ende das Gegendruckelement ausbildet, das durch eine Ausnehmung am Druckelement durchreicht.

Zudem kann das Spannelement zwischen Betätigungselement und Gegendruckelement angeordnet sein, was eine gleichmäßigere Verteilung des Drucks über den Querschnitt des Druckelements und Gegendruckelements ermöglicht.

Weiters kann das Spannelement als Feder, vorzugsweise als Spiralfeder, ausgeführt sein. Bei Wahl einer geeigneten Feder mit gewünschten Parametern wie der Federkraft wird eine besonders genaue Einstellung des gewünschten Maximaldrucks ermöglicht.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig. 1a, b ein schematisches Montageelement,
Fig. 2a, b eine erste Ausgestaltung des Montageelements,
Fig. 3a, b, c eine zweite Ausgestaltung des Montageelements,
Fig. 4a, b, c die Funktionsweise des Montageelements,
Fig. 5 eine Werkzeugaufnahme des Montageelements.

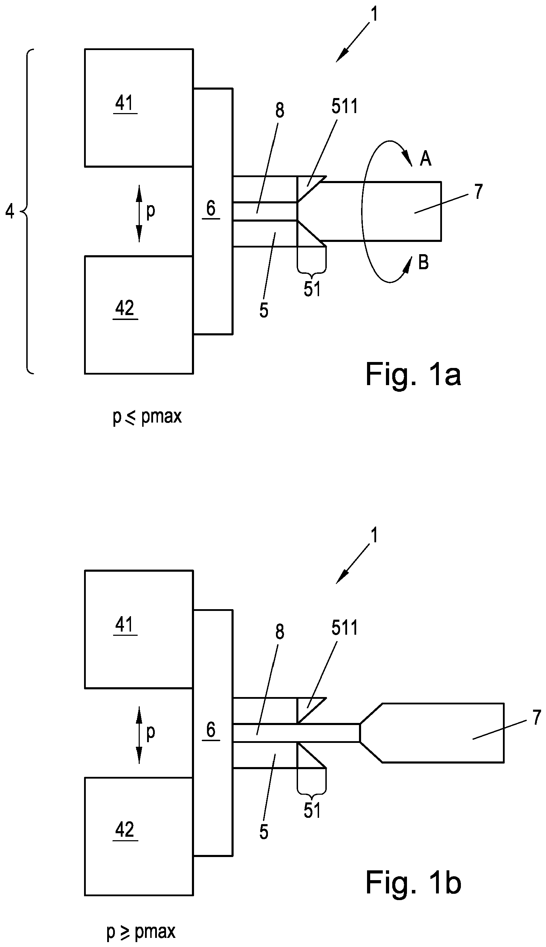

Fig. 1a und b zeigen den schematischen Aufbau eines erfindungsgemäßen Montageelements 1. Dabei umfasst ein Stellorgan 4 ein Druckelement 41 und ein Gegendruckelement 42, welche relativ zueinander bewegbar angeordnet sind und welche mit einem elastischen Spannelement 6 verbunden sind. Das Spannelement 6 wirkt dabei auf das Druckelement 41 und das Gegendruckelement 42 und dient dazu einen Anpressdruck auf das Druckelement 41 und das Gegendruckelement 42 auszuüben. Dass das Druckelement 41 und Gegendruckelement 42 über das Spannelement 6 miteinander verbunden sind, bedeutet nicht zwingend, dass dies direkt erfolgen muss, sondern lediglich, dass durch das Spannelement 6 ein Anpressdruck p zwischen Druckelement 41 und Gegendruckelement 42 ausgeübt werden kann. Dies kann beispielsweise auch eine indirekte Verbindung über weitere Bauteile (z.B. das Betätigungselement 5 wie weiter unten ausgeführt) erfolgen. Das Spannelement 6 kann dazu beispielsweise auch zwischen Druckelement 41 und Gegendruckelement 42 angeordnet sein. Druckelement 41 und Gegendruckelement 42 sind hier als separate Bauteile dargestellt, können aber auch lediglich relativ zueinander bewegbare Abschnitte des Stellorgans 4 darstellen. In diesem Fall muss das Stellorgan 4 elastisch sein, damit Druckelement 41 und ein Gegendruckelement 42 relativ zueinander bewegbar sind und zwischen Druckelement 41 und Gegendruckelement 42 ein Anpressdruck p erzeugt werden kann. Es wäre dann auch vorstellbar, dass auch das Spannelement 6 in das Stellorgan 4 integriert ist, das Stellorgan 4 also Druckelement 41, Gegendruckelement 42 und Spannelement 6 in einem elastischen Bauteil vereint.

Ein Betätigungselement 5 des Montageelements 1 weist eine Werkzeugaufnahme 51 mit einer Montageausnehmung 511 auf, in die ein Montagewerkzeug 7, beispielsweise ein Schraubendreher oder ein Inbusschlüssel, eingeführt werden kann. Bei Betätigung des Betätigungselements 5 mittels des Montagewerkzeugs 7 in einer Anziehrichtung A bzw. Löserichtung B kann ein Anpressdruck p des elastischen Spannelements 6 zwischen dem Druckelement 41 und dem Gegendruckelement 42 erhöht bzw. verringert werden. Dazu greift das Betätigungselement 5 in geeigneter Weise am Montageelement 1 an, um das Spannelement 6 zu spannen oder zu entlasten. Anziehrichtung A und Löserichtung B können je nach Realisierung des Betätigungsmechanismus rotative, lineare oder sonstige Richtungen beschreiben.

Ein Verdrängungselement 8 des Montageelements 1 ist mit dem Spannelement 6 in geeigneter Weise verbunden, sodass es die Montageausnehmung 511 der Werkzeugaufnahme 51 ausfüllt, sobald der Anpressdruck p einen vorgegebenen Maximaldruck pmax überschreitet. Das Verdrängungselement 8 kann z.B. durch das Spannelement 6 verschoben werden, elastisch sein oder in einer sonstigen Weise aktuiert werden. In Fig.1a ist der Anpressdruck p kleiner oder gleich dem Maximaldruck pmax, womit das Betätigungselement 5 noch mit einem Montagewerkzeug 7 über die Montageausnehmung 511 der Werkzeugaufnahme 51 in Anziehrichtung A oder Löserichtung B bedienbar ist. Fig. 1b stellt den Fall dar, in dem der Anpressdruck p größer dem Maximaldruck pmax ist. In diesem Fall füllt das Verdrängungselement 8 die Montageausnehmung 511 aus, womit die Montageausnehmung 511 nicht mehr mit dem Montagewerkzeug 7 bedienbar ist. "Ausfüllen" bedeutet nicht unbedingt ein vollständiges Ausfüllen der Montageausnehmung 511, sondern nur ein so weit wie notwendiges Ausfüllen, um zu verhindern, dass das Montagewerkzeug 7 in Eingriff mit der Montageausnehmung 511 gelangen kann, um das Betätigungselement 5 zu betätigen.

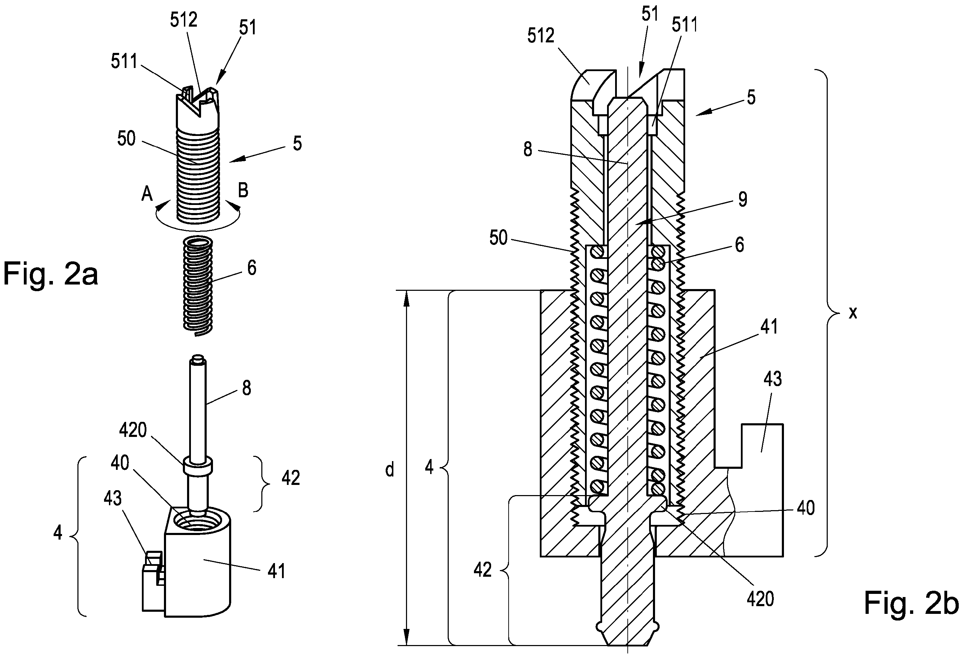

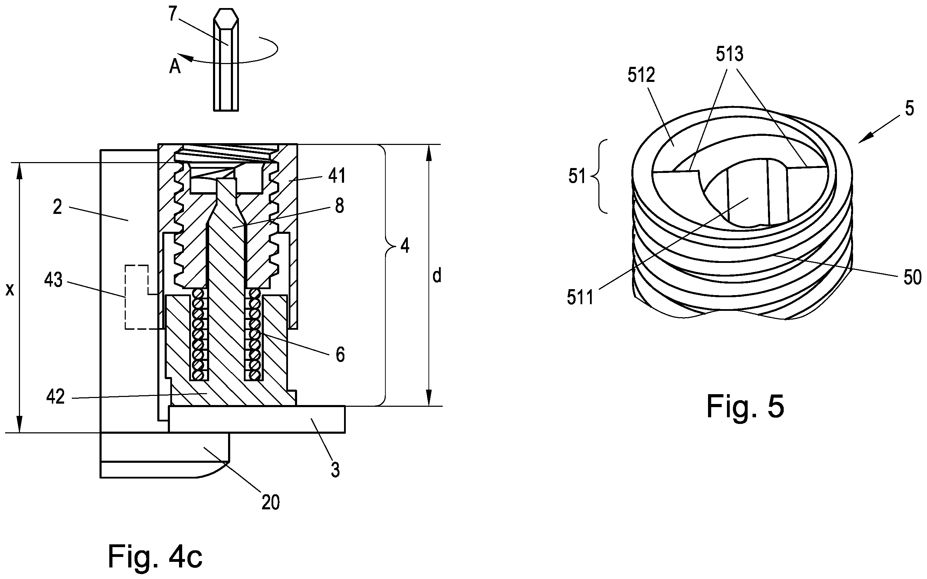

In Fig. 2a eine Explosionsdarstellung einer ersten vorteilhaften Ausgestaltung des erfindungsgemäßen Montageelements 1 und in Fig. 2b ein Längsschnitt durch ein zusammengebautes Montageelement 1 abgebildet. Ein Stellorgan 4 setzt sich aus einem Druckelement 41 und dem Gegendruckelement 42 zusammen, welche hier als separate Bauteile ausgeführt sind. Zudem ist ein Bolzen 9 vorgesehen, dessen erstes Ende das Gegendruckelement 42 ausbildet und das gegenüberliegende zweite Ende das Verdrängungselement 8. So sind das Gegendruckelement 42 und das Verdrängungselement 8 in dieser Ausgestaltung als ein gemeinsamer Bauteil ausgeführt. Ein Betätigungselement 5 weist eine Werkzeugaufnahme 51 mit einer Montageausnehmung 511 (in Sechskantform angedeutet) zur Aufnahme eines Montagewerkzeugs 7 auf. Eine mögliche Ausgestaltung der Werkzeugaufnahme 51 wird weiter unten mit Bezugnahme auf die Fig. 5 genauer beschrieben. Das Druckelement 41 ist hier als Hülse ausgestaltet, mit einem Innengewinde 40 an der Ausnehmung der Hülse. Am Betätigungselement 5 ist an einem Ende ein Außengewinde 50 angeordnet, das in das Innengewinde 40 des Druckelements 41 geschraubt ist. Am anderen axialen Ende des Betätigungselements 5 ist die Werkzeugaufnahme 51 vorgesehen. Damit kann das Betätigungselement 5 über die Werkzeugaufnahme 51 in das Druckelement 41 hinein- oder herausgeschraubt werden.

Sowohl am Betätigungselement 5, als auch am Druckelement 41 ist eine axial durchgehende, zentrale Ausnehmung zur Aufnahme des Bolzens 9, der das Druckelement 41 und das Verdrängungselement 8 ausbildet, vorgesehen. Das Gegendruckelement 42 (erstes Ende des Bolzens 9) ist dabei in der Aufnahme des Druckelements 41 angeordnet und steht axial aus dem Druckelement 41 heraus. Das Verdrängungselement 8 (zweites Ende des Bolzens 9) ist in der Ausnehmung des Betätigungselements 5 angeordnet. Am Bolzen 9 ist ein Radialsteg 420 vorgesehen, der den Bolzen 9 axial in Gegendruckelement 42 und Verdrängungselement 8 teilt. Zusätzlich dient der Radialsteg 420 als axialer Anschlag für ein erstes Ende des Spannelements 6, das hier als Spiralfeder ausgeführt ist. Das andere Ende des Spannelements 6 liegt an einem axialen Anschlag in der Ausnehmung des Betätigungselements 5 an. Das Spannelement 6 verbindet damit in dieser Ausgestaltung das Druckelement 41 und das Gegendruckelement 42 über das Betätigungselement 5. Gleichzeitig erzeugt das Spannelement 6 den Anpressdruck p.

Über die Gewindestellung von Innengewinde 40 und Außengewinde 50 wird die Ausdehnung von Betätigungselement 5 und Druckelement 41 verstellt und das elastische Spannelement 6 (hier eine Spiralfeder) gespannt oder entlastet. Wird das Druckelement 41 ortsfest gehalten, beispielsweise über ein mit dem Grundkörper verbundenes Verbindungselement 43 und gleichzeitig die axiale Verschiebung des Bolzens 9 bei einer bestimmten Länge d des Stellgliedes 4 verhindert, erzeugt das Spannelement 6 in Abhängigkeit von der Längsausdehnung x von Betätigungselement 5 und Druckelement 41 einen bestimmten Anpressdruck p. Damit wird über die Gewindestellung von Innengewinde 40 und Außengewinde 50 der vom Spannelement 6 zwischen Druckelement 41 und Gegendruckelement 42 ausgeübte Anpressdruck p eingestellt.

Das Betätigungselement 5 kann über ein in die Montageausnehmung 511 eingebrachtes Montagewerkzeug 7 in Anziehrichtung A betätigt werden um den Anpressdruck p des elastischen Spannelements 6 zwischen dem Druckelement 41 und dem Gegendruckelement 42 zu erhöhen. Bei Betätigung des Betätigungselements 5 in Löserichtung B wird der Anpressdruck analog verringert. In der dargestellten Ausgestaltung ist die Anziehrichtung A die Einschraubrichtung des Innengewindes 50 des Betätigungselements 5 in das Außengewinde 40 des Druckelements 41, wobei die Löserichtung B der Anziehrichtung A entgegengesetzt ist.

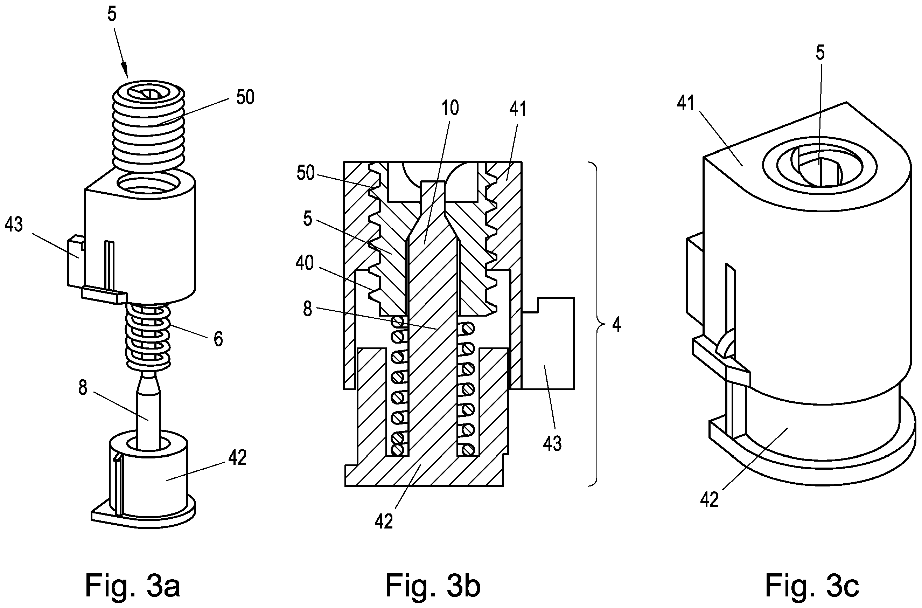

Fig. 3a-c zeigt eine ähnliche Ausgestaltung des Montageelements 1 zu jener aus Fig.1, wobei Fig.3a eine Explosionsdarstellung, Fig.3b einen Längsschnitt und Fig. 3c eine perspektivische Ansicht des zusammengebauten Montageelements 1 zeigt. Wie in der Ausgestaltung nach Fig. 2 ist auch hier das Druckelement 41 als Hülse mit einer zentralen Ausnehmung ausgeführt. Das Gegendruckelement 42 ist zylinderförmig ausgeführt mit einem zentralen, axial abstehenden Dorn 10, der das Verdrängungselement 8 ausbildet. Am Druckelement 41 ist an einem ersten Ende wieder ein Innengewinde 40 vorgesehen, in das das Betätigungselement 5 mit einem Außengewinde 50 eingeschraubt ist. Das Gegendruckelement 42 ist axial gleitend in der zentralen Ausnehmung am zweiten Ende des Druckelements 41 angeordnet. Am Betätigungselement 5 ist wieder eine zentral durchgehende Ausnehmung vorgesehen, in die das axial freie Ende des Dorns 10, das das Verdrängungselement 8 ausbildet, eingreift. An einem ersten axialen Ende des Betätigungselements 5 ist wiederum eine Werkzeugaufnahme 51 vorgesehen. Zwischen Betätigungselement 5 und Gegendruckelement 42 ist das Spannelement 6 angeordnet, das mit einem ersten Ende am Gegendruckelement 42 anliegt und mit dem gegenüberliegenden zweiten Ende am Betätigungselement 5. Das Spannelement 6 ist hier ebenso als Spiralfeder ausgestaltet. Das Gegendruckelement 42 ist über das Spannelement 6 mit einem Betätigungselement 5 elastisch gekoppelt.

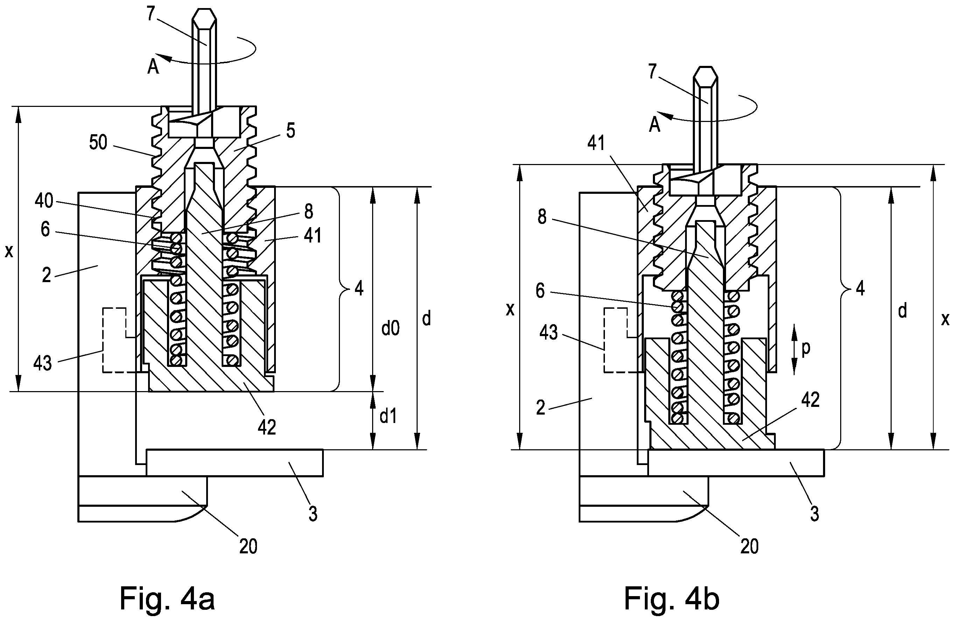

In den Fig. 4a-c wird eine Montage eines Moduls 2 auf einem Grundkörper 3 mittels einer Montageeinheit 1 nach der in Fig.3 dargestellten Ausgestaltung beschrieben. Das Druckelement 41 ist dazu in geeigneter Weise mit dem Modul 3 verbunden, hier über ein Verbindungselement 43 am Druckelement 41, welches in einer Ausnehmung am Modul 2 eingehakt ist. In Fig. 4a befinden sich Gegendruckelement 42 und der Grundkörper 3 noch in einem Abstand d1 voneinander und das Stellglied 4 weist eine Ausgangslänge d0 auf. Ohne einen durch den Grundkörper 3 ausgeübten Gegendruck auf das Gegendruckelement 42 befindet sich das elastische Spannelement 6 in entspannter Position. Bei Betätigung des Betätigungselements 5 in Anziehrichtung A wird das Außengewinde 51 des Betätigungselements 5 weiter in das Innengewinde 40 des Druckelements 41 geschraubt, womit das Betätigungselement 5 über das noch nicht komprimierte Spannelement 6 das Gegendruckelement 42 immer weiter in Richtung des Grundkörpers 3 drückt, womit sich vorerst die Längsausdehnung x von Betätigungselement 5 und Gegendruckelement 42 nicht ändert. Sobald das Gegendruckelement jedoch 42 am Grundkörper 3 anliegt, kann der eigentliche Vorgang der Montage des Moduls 2 auf dem Grundkörper 3 beginnen und wird in Fig. 4b dargestellt. Bei weiterer Betätigung des Betätigungselements 5 in Anziehrichtung A wird das Spannelement 6 komprimiert, womit zwischen Druckelement 41 und ein Gegendruckelement 42 ein Anpressdruck p aufgebaut wird, mit dem das Gegendruckelement 42 gegen den Grundkörper 3 gepresst wird. Der Grundkörper 3 liegt dabei an einer Gegenklemmfläche 20 des Moduls 2 an, sodass der Grundkörper 3 zwischen dem Modul 2 und dem Gegendruckelement 42 geklemmt wird.

Das Spannelement 6 und die Geometrie des Verdrängungselements 8 sind derart gewählt, dass sobald der Anpressdruck p einen vorgegebenen Maximaldruck pmax überschreitet, das Verdrängungselement 8 die Montageausnehmung 511 der Werkzeugaufnahme 51 am Betätigungselement 5 ausfüllt und das Montagewerkzeug 7 aus der Montageausnehmung 511 verdrängt. Damit kann das Betätigungselement 5 nicht weiter betätigt werden, womit ein definierter Anpressdruck pmax erreicht wird. Hierbei ist auch die geeignete Dimensionierung der weiteren Bauteile des Montageelements 1, insbesondere des Verdrängungselements 8, essentiell und muss auf das Spannelement 6 abgestimmt sein. So muss sichergestellt sein, dass sobald das Spannelement 6 durch die Gewindestellung von Innengewinde 40 und Außengewinde 50 derart komprimiert wird, dass der Maximaldruck pmax als Anpressdruck p wirkt, das Gegendruckelement 8 die Montageausnehmung 511 ausfüllt.

Eine mögliche Ausgestaltung der Werkzeugaufnahme 51 in Fig. 5 dargestellt. Eine Montageausnehmung 511 der Werkzeugaufnahme 51 ist ausgestaltet, ein Montagewerkzeug 7 aufzunehmen, wobei hier die Montageausnehmung 511 eine sechskantige Ausnehmung aufweist, um einen sechskantigen Inbus als Montagewerkzeug 7 aufzunehmen. Natürlich ist auch jede andere Form von Montageausnehmung 511 und passendem Montagewerkzeug 7 vorstellbar. Füllt das Gegendruckelement 8 aufgrund eines Anpressdrucks p, der dem Maximaldruck pmax entspricht, aus, so wird das in die Montageausnehmung 511 eingebrachte Montagewerkzeug 7 verdrängt. Zusätzlich ist eine Demontageausnehmung 512 in der Werkzeugaufnahme 51 vorgesehen, die axial an die Montageausnehmung 511 anschließt und die Angriffsflächen 513 für ein Demontagewerkzeug aufweist. Die Angriffsflächen 513 sind beispielsweise axiale Vorsprünge in der Demontageausnehmung 512, um mit einem Demontagewerkzeug, beispielsweise ein einfacher Schlitzschraubendreher, ein Drehmoment auf das Betätigungselement 5 ausüben zu können. Die Angriffsflächen 513 sind natürlich so angeordnet, dass ein Anschlag für das Demontagewerkzeug in Öffnungsrichtung entsteht, um eine Betätigung des Betätigungselements 5 in die Löserichtung B zu ermöglichen. Beispielsweise weist die Demontageausnehmung 512 eine in Anziehrichtung A angeschrägte Flanke auf. So kann beispielsweise ein Schlitzschraubenzieher als Demontagewerkzeug in die Demontageausnehmung 512 der Werkzeugaufnahme 51 eingeführt werden und damit das Betätigungselement in Löserichtung B betätigen, da das Demontagewerkzeug mit den durch die Flanken ausgebildeten Angriffsflächen 513 in Anschlag geht. Bei einer Betätigung in Anziehrichtung A rutscht das Lösewerkzeug B jedoch über die Schrägen der Flanken der Demontageausnehmung 512 durch, womit eine Betätigung des Betätigungselements 5 in Anziehrichtung A nicht möglich ist. Es ist offensichtlich, dass die Demontageausnehmung 512 nicht durch das Verdrängungselement 8 derart ausgefüllt sein darf, dass das Demontagewerkzeug nicht eingeführt werden kann. Hierzu ist in dieser Ausgestaltung die Montageausnehmung 511 tiefer in der Werkzeugaufnahme 51 versenkt, als die Demontageausnehmung 512. Die Demontageausnehmung 512 kann sich, wie in Fig. 2a angedeutet, bis an den radialen Rand der Werkzeugaufnahme 51 erstrecken oder auch wie in der Ausgestaltung nach Fig. 3 oder 5 in der Werkzeugaufnahme 51 radial nach außen begrenzt sein.

## Patentansprüche

1. Montageelement (1) umfassend ein Stellorgan (4), ein elastisches Spannelement (6) und ein Betätigungselement (5), wobei das Stellorgan (4) ein Druckelement (41) und ein Gegendruckelement (42) aufweist und das elastische Spannelement (6) mit dem Druckelement (41) und dem Gegendruckelement (42) verbunden ist, und das Betätigungselement (5) eine Werkzeugaufnahme (51) mit einer Montageausnehmung (511) aufweist und bei Betätigung in eine Anziehrichtung (A) bzw. Löserichtung (B) einen Anpressdruck (p) des elastischen Spannelements (6) zwischen dem Druckelement (41) und dem Gegendruckelement (42) erhöht bzw. verringert, **dadurch gekennzeichnet, dass** das Montageelement (1) ein Verdrängungselement (8) aufweist, das derart mit dem Spannelement (6) verbunden ist, dass das Verdrängungselement (8), sobald der Anpressdruck (p) einen Maximaldruck (pmax) überschreitet, die Montageausnehmung (511) der Werkzeugaufnahme (51) ausfüllt.

2. Montageelement (1) nach Anspruch 1, **dadurch gekennzeichnet, dass** die Werkzeugaufnahme (51) eine Demontageausnehmung (512) aufweist, die bei mit dem Verdrängungselement (8) ausgefüllter Montageausnehmung (511) eine Betätigung des Betätigungselements (5) in die Löserichtung (B) ermöglicht, um den Anpressdruck (p) zu verringern.

3. Montageelement (1) nach Anspruch 2, **dadurch gekennzeichnet, dass** die Demontageausnehmung (512) eine in Anziehrichtung (A) angeschrägte Flanke aufweist.

4. Montageelement (1) nach Anspruch 2 oder 3, **dadurch gekennzeichnet, dass die** Demontageausnehmung (512) eine geringere Tiefe als die Montageausnehmung (511) aufweist.

5. Montageelement (1) nach einem der Ansprüche 1 bis 4, **dadurch gekennzeichnet, dass** das Druckelement (41) als Hülse mit einer zentralen axial durchgehenden Ausnehmung ausgeführt ist und an einem ersten axialen Ende an der Ausnehmung des Druckelement (41) ein Innengewinde (40) angeordnet ist.

6. Montageelement (1) nach Anspruch 5, **dadurch gekennzeichnet, dass** das Betätigungselement (5) mit einem Außengewinde (50) in das (40) Innengewinde des Druckelements geschraubt ist.

7. Montageelement (1) nach Anspruch 6, **dadurch gekennzeichnet, dass** am Betätigungselement (5) eine zentrale, axial durchgehende Ausnehmung vorgesehen ist, wobei an einem ersten axialen Ende des Betätigungselements (5) die Montageausnehmung (511) vorgesehen ist und das Verdrängungselement (8) in der Ausnehmung des Betätigungselements (5) angeordnet ist.

8. Montageelement (1) nach Anspruch 7, **dadurch gekennzeichnet, dass** am Gegendruckelement (42) ein zentraler axial vorstehender Dorn vorgesehen ist, der das Verdrängungselement (8) ausbildet und der in der Ausnehmung des Betätigungselements (8) angeordnet ist.

9. Montageelement (1) nach Anspruch 7, **dadurch gekennzeichnet, dass** ein Bolzen vorgesehen ist, dessen erstes axiale Ende das Verdrängungselement (8) ausbildet, das der Ausnehmung des Betätigungselements (5) angeordnet ist, und dessen gegenüberliegendes zweites axiale Ende das Gegendruckelement (42) ausbildet, das durch eine Ausnehmung am Druckelement (41) durchreicht.

10. Montageelement (1) nach Anspruch 8 oder 9, **dadurch gekennzeichnet, dass** das Spannelement (6) zwischen Betätigungselement (5) und Gegendruckelement (42) angeordnet ist.

11. Montageelement (1) nach Anspruch 10, **dadurch gekennzeichnet, dass** das Spannelement als Feder, vorzugsweise als Spiralfeder, ausgeführt ist.

12. Verwendung eines Montageelements (1) nach einem der Ansprüche 1 bis 11 für die Montage eines Moduls (2) an einem Grundkörper (3), wobei das Druckelement (41) Kontakt zum Modul (2) und das Gegendruckelement (42) Kontakt zum Grundkörper (3) hat und bei Betätigung des Betätigungselements (5) in Anziehrichtung (A) der Anpressdruck (p) zwischen Druckelement (42) und Gegendruckelement (41) aufgebaut wird, bis der Anpressdruck (p) den Maximaldruck (pmax) erreicht.

## Claims

1. A mounting element (1) comprising a control unit (4), a resilient clamping element (6) and an actuation element (5), the control unit (4) comprising a pressure element (41) and a counterpressure element (42), and the resilient clamping element (6) being connected to the pressure element (41) and to the counterpressure element (42), and the actuation element (5) comprising a tool holder (51) having a mounting recess (511) and increasing or reducing a contact pressure (p) of the resilient clamping element (6) between the pressure element (41) and the counterpressure element (42) when actuated in a tightening direction (A) and a release direction (B), respectively, **characterized in that** the mounting element (1) comprises a displacement element (8) that is connected to the clamping element (6) in a way it fills the mounting recess (511) of the tool holder (51) as soon as the contact pressure (p) exceeds a maximum pressure (pmax).

2. The mounting element (1) according to claim 1, **characterized in that** the tool holder (51) comprises a dismantling recess (512) which allows the actuation element (5) to be actuated in the release direction (B), in order to reduce the contact pressure (p), when the mounting recess (511) is filled by the displacement element (8).

3. The mounting element (1) according to claim 2, **characterized in that** the dismantling recess (512) comprises a flank that is beveled in the tightening direction (A).

4. The mounting element (1) according to any of claims 2 or 3, **characterized in that** the dismantling recess (512) is less deep than the mounting recess (511).

5. The mounting element (1) according to any of claims 1 to 4, **characterized in that** the pressure element (41) is formed as a bush having a central axially continuous recess and an internal thread (40) is arranged at a first axial end of the recess of the pressure element (41).

6. The mounting element (1) according to claim 5, **characterized in that** an external thread (50) of the actuation element (5) is screwed into the internal thread (40) of the pressure element.

7. The mounting element (1) according to claim 6, **characterized in that** a central, axially continuous recess is provided on the actuation element (5), the mounting recess (511) being provided on a first axial end of the actuation element (5) and the displacement element (8) being arranged in the recess of the actuation element (5).

8. The mounting element (1) according to claim 7, **characterized in that** a central axially protruding pin is provided on the counterpressure element (42), which pin forms the displacement element (8) and is arranged in the recess of the actuation element (8).

9. The mounting element (1) according to claim 7, **characterized in that** a bolt is provided, the first axial end of which forms the displacement element (8) that is arranged in the recess of the actuation element (5), and the opposing second axial end of which forms the counterpressure element (42) that passes through a recess on the pressure element (41).

10. The mounting element (1) according to either claim 8 or claim 9, **characterized in that** the clamping element (6) is arranged between the actuation element (5) and the counterpressure element (42).

11. The mounting element (1) according to claim 10, **characterized in that** the clamping element is formed as a spring, preferably as a spiral spring.

12. Use of a mounting element (1) according to any of claims 1 to 11 for mounting a module (2) on a main body (3) wherein the pressure element (41) is in contact to the module (2) and the counterpressure element (42) is in contact to the main body (3) and the contact pressure (p) increases while the actuation element (5) is actuated in tightening direction (A) until the contact pressure (p) reaches a maximum pressure (pmax).

## Revendications

1. Élément de montage (1) comprenant un organe de réglage (4), un élément de serrage élastique (6) et un élément d'actionnement (5), dans lequel l'organe de réglage (4) présente un élément de pression (41) et un élément de contre-pression (42) et l'élément de serrage élastique (6) est relié à l'élément de pression (41) et à l'élément de contre-pression (42), et l'élément d'actionnement (5) présente un porte-outil (51) comportant un évidement de montage (511) et, lorsqu'il est actionné, augmente ou réduit, dans un sens de serrage (A) ou de libération (B), une pression de contact (p) de l'élément de serrage élastique (6) entre l'élément de pression (41) et l'élément de contre-pression (42), **caractérisé en ce que** l'élément de montage (1) présente un élément de déplacement (8) qui est relié à l'élément de serrage (6) de telle manière que l'élément de déplacement (8) remplisse l'évidement de montage (511) du porte-outil (51) dès que la pression de contact (p) dépasse une pression maximale (pmax).

2. Élément de montage (1) selon la revendication 1, **caractérisé en ce que** le porte-outil (51) présente un évidement de démontage (512) qui, lorsque l'évidement de montage (511) est rempli de l'élément de déplacement (8), permet d'actionner l'élément d'actionnement (5) dans le sens de libération (B) afin de réduire la pression de contact (P).

3. Élément de montage (1) selon la revendication 2, **caractérisé en ce que** l'évidement de démontage (512) présente un flanc qui est biseauté dans le sens de serrage (A).

4. Élément de montage (1) selon la revendication 2 ou 3, **caractérisé en ce que** l'évidement de démontage (512) a une profondeur inférieure à celle de l'évidement de montage (511).

5. Élément de montage (1) selon l'une des revendications 1 à 4, **caractérisé en ce que** l'élément de pression (41) est réalisé sous la forme d'un manchon présentant un évidement central s'étendant axialement et **en ce qu'**un filetage intérieur (40) est disposé à une première extrémité axiale au niveau de l'évidement de l'élément de pression (41).

6. Élément de montage (1) selon la revendication 5, **caractérisé en ce que** l'élément d'actionnement (5) est vissé par un filetage extérieur (50) dans le filetage intérieur (40) de l'élément de pression.

7. Élément de montage (1) selon la revendication 6, **caractérisé en ce qu'**un évidement central s'étendant axialement est prévu au niveau de l'élément d'actionnement (5), dans lequel l'évidement de montage (511) est prévu à une première extrémité axiale de l'élément d'actionnement (5) et l'élément de déplacement (8) est disposé dans l'évidement de l'élément d'actionnement (5).

8. Élément de montage (1) selon la revendication 7, **caractérisé en ce qu'**un mandrin central faisant saillie axialement est prévu au niveau de l'élément de contre-pression (42), lequel mandrin central forme l'élément de déplacement (8) et est disposé dans l'évidement de l'élément d'actionnement (8).

9. Élément de montage (1) selon la revendication 7, **caractérisé en ce qu'**un boulon, dont la première extrémité axiale forme l'élément de déplacement (8), est prévu, lequel élément de déplacement est disposé dans l'évidement de l'élément d'actionnement (5), et dont la seconde extrémité axiale opposée forme l'élément de contre-pression (42) qui passe à travers un évidement de l'élément de pression (41).

10. Élément de montage (1) selon la revendication 8 ou 9, **caractérisé en ce que** l'élément de serrage (6) est disposé entre l'élément d'actionnement (5) et l'élément de contre-pression (42).

11. Élément de montage (1) selon la revendication 10, **caractérisé en ce que** l'élément de serrage est réalisé sous la forme d'un ressort, de préférence d'un ressort en spirale.

12. Utilisation d'un élément de montage (1) selon l'une des revendications 1 à 11, pour le montage d'un module (2) sur un corps de base (3), dans laquelle l'élément de pression (41) est en contact avec le module (2) et l'élément de contre-pression (42) est en contact avec le corps de base (3), et la pression de contact (p) s'établit entre l'élément de pression (42) et l'élément de contre-pression (41) lorsque l'élément d'actionnement (5) est actionné dans le sens de serrage (A) jusqu'à ce que la pression de contact (p) atteigne la pression maximale (pmax).
